# EUROPEAN PATENT SPECIFICATION

(11) **EP 1 049 240 B1**
(45) Date of publication and mention of the grant of the patent: **15.09.2004**
(21) Application number: 00108445.8
(22) Date of filing: 18.04.2000
(51) Int. Cl.: H02M 3/158, H02M 3/335

(54) **A dc/dc converter with several outputs, particularly for use in motor vehicles**
Ein Gleichspannungswandler mit mehrere Ausgängen, insbesondere zum Betrieb in Fahrzeugen
Un convertisseur à découpage à plusieurs sorties, en particulier pour utilisation dans des véhicules automobiles

(30) Priority: 23.04.1999 IT TO990323
(43) Date of publication of application: 02.11.2000
(73) Proprietor: MAGNETI MARELLI SISTEMI ELETTRONICI S.p.A., 20011 Corbetta (Milano) (IT)
(72) Inventor: Nepote, Andrea, 10131 Torino (IT)
(74) Representative: Quinterno, Giuseppe

(56) References cited:
- EP-A- 0 284 172
- EP-A- 0 380 702
- EP-A- 0 589 204
- EP-A- 0 676 854
- EP-A- 0 698 959
- EP-A- 0 772 284
- EP-A- 0 794 607
- WO-A-98/53378
- FR-A- 2 497 421
- GB-A- 2 087 113
- US-A- 4 912 617
- US-A- 5 442 534
- US-A- 5 485 076
- US-A- 5 552 695
- US-A- 5 691 889
- PATENT ABSTRACTS OF JAPAN vol. 1998, no. 14, 31 December 1998 (1998-12-31) & JP 10 234178 A (TOKO INC.)

## Description

The present invention relates to a dc/dc converter with several outputs of the kind defined in the preamble of Claim 1, which is disclosed for instance in PATENT ABSTRACTS OF JAPAN vol. 1998, no. 14, 31 December 1998 & JP-10 234178 A (TOKO INC.).

Dc/dc converters, of the type having an input connected to a direct-current voltage supply such as a battery in order to supply, at a plurality of outputs, regulated voltages with values or levels either higher or lower than those of the supply voltage, are used in various applications.

Dc/dc converters used for this purpose up to now have various disadvantages, particularly their considerable cost and size.

The circuit topology which is conventionally used most frequently for such converters is that known as the "flyback" type. This topology generally requires a single controlled electronic switch and a single magnetic component (a transformer with a primary winding and one or more secondary windings, all wound on the same core). However, this circuit topology has the disadvantage that the currents flowing in the primary winding and in the input capacitor or capacitors have very high values. The input capacitor or capacitors have to have high capacitance. Moreover, there are problems from the point of view of heat dissipation and electromagnetic compatibility. In the "fly-back" circuit topology, the leakage inductance of the transformer leads to a decline in the overall conversion efficiency. It is also generally necessary to use clamping circuits or snubber circuits with power capacitors.

According to the prior art, in such cases, several dc/dc converters, possibly with different topologies according to the intended purpose of their output voltages, are used in parallel or in series. In this case, each output can be regulated independently. However, this arrangement involves the use of a plurality of magnetic components as well as a plurality of controlled electronic switches, and hence high costs.

EP-0 794 607-A discloses a main converter of the booster type coupled to an auxiliary converter of the back type, each comprising an electronic switch.

GB-2087 113 A discloses further dc/dc converters including a plurality of electronic switches.

An object of the present invention is therefore to provide a new and improved dc/dc converter with several outputs of the initially defined kind, particularly for use in motor vehicles which, in particular, can generate an output voltage of a value higher than that of the input supply, for example, for driving fuel injectors, and at least one regulated voltage, for example, of about 6V for the supply of logic circuits and components.

This and other objects are achieved, according to the invention, by a dc/dc converter the basic characteristics of which are defined in appended Claim 1.

Further characteristics and advantages of the invention will become clear from the following detailed description, given purely by way of non-limiting example with reference to the appended drawings, in which:
Figure 1 is a circuit diagram of a dc/dc converter,
Figure 2 is a circuit diagram of a second dc/dc converter,
Figure 3 is a series of graphs showing, by way of example, curves of electrical quantities and signals in the converter according to Figure 2 as functions of time t, and
Figure 4 is a circuit diagram of a converter according to the invention.

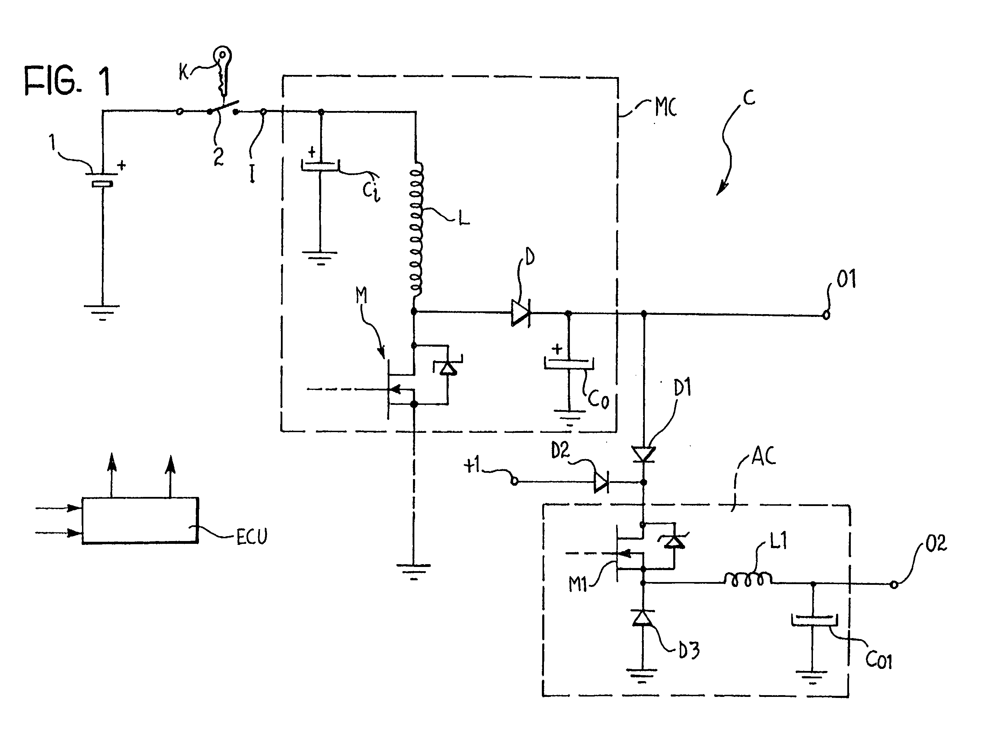

In Figure 1, a direct-current voltage supply, such as the battery of a motor vehicle, is indicated 1. In Figure 1, the supply 1 has its negative terminal connected to earth and its positive terminal can be connected, by means of a switch 2, to the input I of a dc/dc converter, generally indicated C.

The switch 2 is, for example, a switch which is incorporated in the ignition and starter switch of a motor vehicle and which can be operated manually by means of a key K.

The converter C has two outputs O1 and O2.

In the embodiment shown in Figure 1, the converter C comprises a main converter circuit MC and an auxiliary converter circuit AC.

The input and the output of the main converter circuit MC correspond to the input I and to the output O1 of the dc/dc converter C as a whole. As will be described further below, the input of the auxiliary converter circuit AC is connected to the output of the main converter and its output corresponds to the output O2 of the converter C as a whole.

The main converter MC is of the "booster" type. In the embodiment shown by way of example, this main converter comprises, in known manner, an input capacitor Cᵢ, connected between the input I and earth, and an inductor L connected between the input I and the drain of a MOSFET transistor M the source of which is connected to earth. A diode D has its anode connected to the drain of the transistor M and its cathode connected to the output O1. An output capacitor Cₒ is connected between the cathode of the diode D and the earth.

The gate of the transistor M is connected to an output of an electronic control unit ECU.

This unit is arranged, again in known manner, to apply to the gate of the transistor, a driving signal, for example, a pulse-width modulated (PWM) signal. In operation, a direct-current voltage of a value higher than that of the voltage supplied by the supply 1 is made available at the output O1 of the main converter MC. The unit ECU is arranged to regulate the voltage at the output O1 by modifying the signal applied to the gate of the transistor M if necessary.

In the embodiment according to Figure 1, the auxiliary converter AC is of the "step-down" or "bucking" type. This auxiliary converter has its input connected to the output O1 of the main converter MC, preferably by means of a diode D1 which has its anode connected to the output O1.

In the embodiment shown, the auxiliary converter AC comprises, in known manner, a MOSFET transistor M1, having its drain connected to the cathode of the diode D1. An inductor L1 is connected between the source of the transistor M1 and the output O2. A diode D3 has its cathode connected to the source of the transistor M1 and its anode connected to earth. An output capacitor C_{O1} is connected between the output terminal O2 and earth.

The gate of the transistor M1 is connected to another output of the electronic control unit ECU.

The input of the auxiliary converter AC is advantageously but not necessarily connected to the positive terminal of the voltage supply 1 by means of a further diode D2. In particular, this diode has its anode connected directly to the positive terminal of the supply 1.

The input of the auxiliary converter AC is in fact connected to the output O1 of the main converter MC and to the voltage supply 1 in an "OR" arrangement, by means of the diodes D1 and D2. The object of this connection will be explained below.

In operation, under the control of the unit ECU, the auxiliary converter AC supplies to the output O2 a regulated direct-current voltage of a value lower than that of the supply 1, for example, a voltage of about 6V.

The dc/dc converter C of Figure 1 has many advantages.

In the first place, it comprises a single power transistor which is the transistor M of the main converter MC. The transistor M1 of the auxiliary converter AC is a low-power transistor and may be produced in integrated form in the controller ECU associated with the converter. There is always a more than adequate voltage at the input of the auxiliary converter AC, even if the voltage provided by the supply 1 falls towards the lower end of its range of variability.

The inductance L of the main converter MC also has a filtering effect which is effective in reducing the electromagnetic emissions of the converter C as a whole.

The converter C also has all of the advantages intrinsic in the use of a converter of the "booster" type, such as the fact that the actual value of the current in the inductor L is very close to the mean value, and the fact that the leakage inductance does not lead to a decline in efficiency.

If a dc/dc converter with more than two outputs is required, it is possible to connect the output of the main converter MC to further auxiliary converters such as that already described, or to couple the inductor L of the main converter magnetically, by means of a magnetic core, to a secondary winding with a diode in series and with a capacitor in parallel with the output, in order to produce an auxiliary converter substantially of the "fly-back" type.

The diodes D1 and D2 enable a so-called "power-latching" function to be performed, enabling a direct-current voltage to be supplied to the output O2 for some time after the switch 2 has been opened by means of the key K, for example, to allow the control logic circuitry supplied by this output to bring to a conclusion predetermined operations or routines to be performed upon the occurrence of the so-called "key-off" condition.

Naturally, during normal operation and hence with the switch 2 closed, the input of the auxiliary converter AC is supplied by the output O1 of the main converter MC which is at a voltage higher than that supplied by the supply 1.

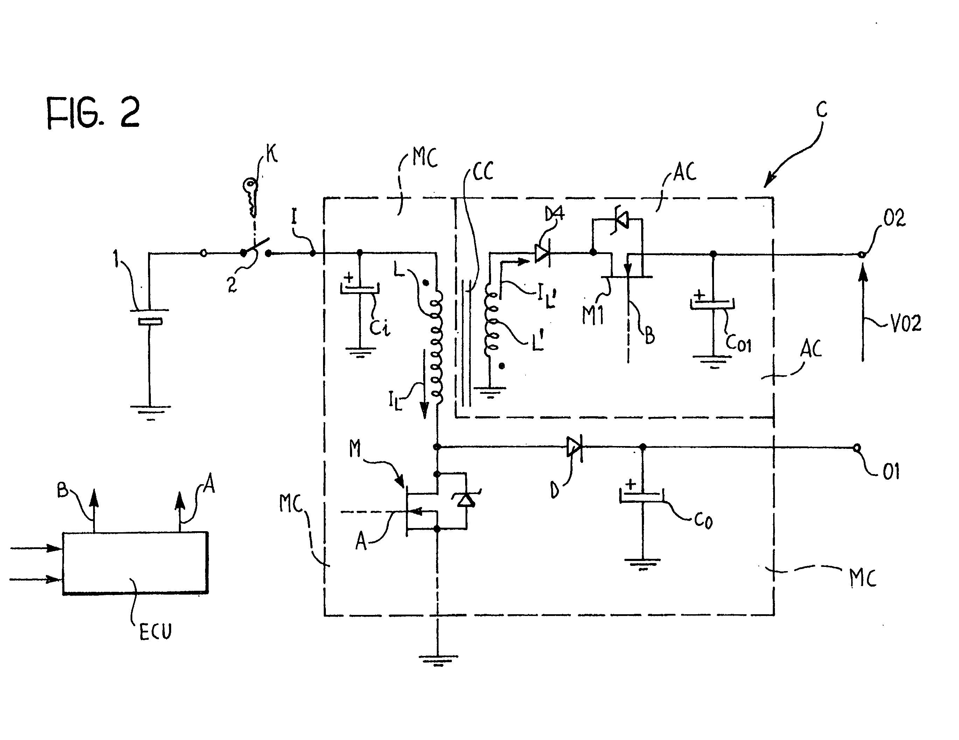

Figure 2 shows another dc/dc converter C. In this drawing, parts and elements already described with reference to Figure 1 have again been attributed the same alphanumeric reference symbols.

The converter C according to Figure 2 also comprises a main converter and (at least) one auxiliary converter AC.

The main converter MC is substantially identical to that already described with reference to Figure 1.

The auxiliary converter AC of Figure 2 comprises a winding L' coupled magnetically to the winding L of the main converter MC by means of a common core CC on which both of these windings are wound. The windings L and L' together form a transformer.

The winding L' has one terminal connected to earth and the other terminal connected to the anode of a diode D4 which is connected to the output O2 via the drain-source path of a MOSFET transistor M1. An output capacitor C_{O1} is connected between the output terminal O2 and earth.

The auxiliary converter AC is substantially a fly-back converter in which the presence of the transistor M1 enables the direct-current voltage supplied at the output O2 to be regulated. For this purpose, the unit ECU which drives both of the transistors M and M1, is arranged to monitor the voltage in the output capacitor C_{O1} of the auxiliary converter and to enable the transistor M1 when this voltage falls below a predetermined threshold value.

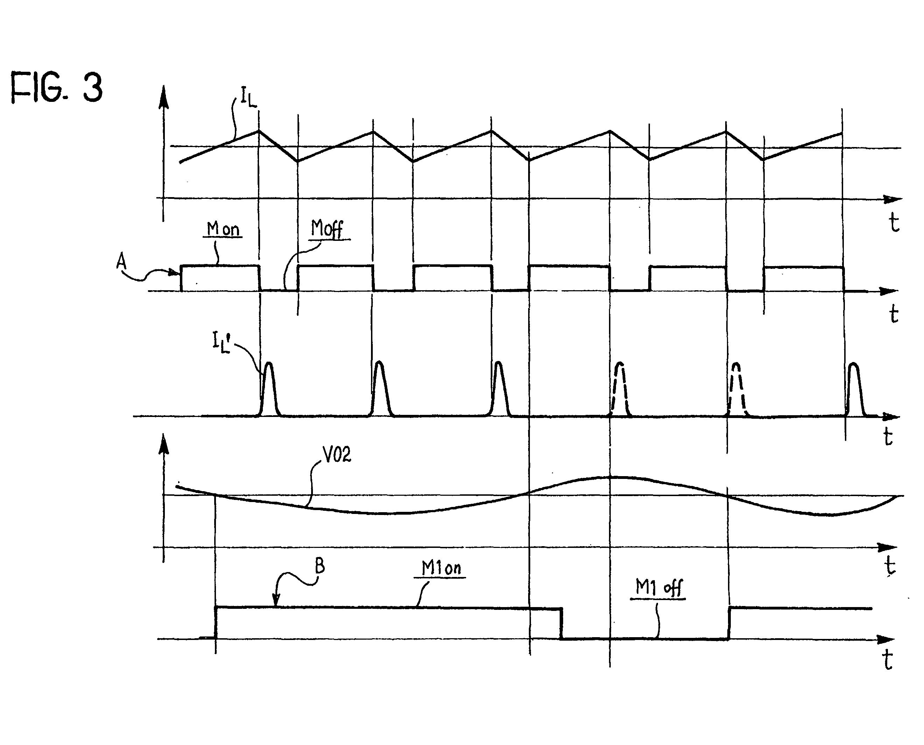

Figure 3 of the appended drawings shows, by way of example, curves of some electrical quantities and signals in the converter shown in Figure 2, as functions of time t, given on the abscissa.

The upper graph of Figure 3 shows the curve of the current I_{L} flowing in the winding L of the main converter MC as a result of the application, to the gate of the transistor M, of a pulse-width modulated (PWM) signal an example of the curve of which is indicated A in Figure 3.

The third graph of Figure 3 shows, by way of example, the curve of the current I_{L'} in the secondary winding L' of the auxiliary converter AC. The curve of this current is substantially that of a sequence of pulses.

The fourth graph of Figure 3 shows qualitatively the curve of the voltage in the output capacitor C_{O1} of the auxiliary converter AC, that is, the voltage VO2 supplied at the output O2.

The graphs shown in Figure 3 relate to a so-called "pulse-skipping" method of driving of the auxiliary converter AC, in which the transistor M1 is enabled by the unit ECU by means of an enabling signal indicated B in Figures 2 and 3. This signal is produced by the unit ECU on the basis of the curve of the output voltage VO2. As can be seen in Figure 3, when the voltage VO2 falls below a threshold value, the unit ECU makes the transistor M1 conductive by means of the signal B until the voltage VO2 returns above a threshold value which may be equal to the previous value or may differ therefrom by a hysteresis margin. In order to reduce the problems connected with the parasitic inductances of the windings, the control unit ECU is advantageously arranged to disable the transistor M1 only during a period of time in which the transistor M of the main converter MC is conductive, as shown in the graphs of Figure 3.

In the converter of Figure 2, the electronic switch M1 of the auxiliary converter AC may also possibly be integrated with the controller ECU.

Moreover, further output voltages may be made available by "duplicating" the auxiliary converter or forming "multiple" auxiliary converters, the windings of the various auxiliary converters being coupled to the winding of the main converter by means of the same core.

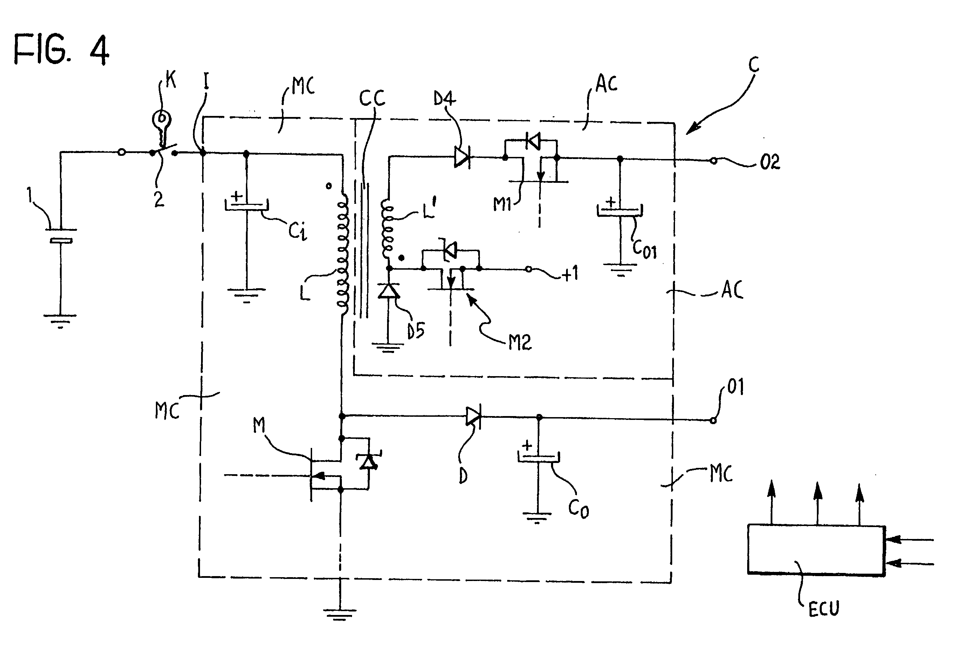

Figure 4 shows a converter according to the invention which shares some features of the converter C of Figure 2. In Figure 4, parts and elements already described have again been attributed the same alphanumeric reference symbols.

In the auxiliary converter AC of Figure 4, as well as the electronic switch M1 connected to one terminal of the winding L', there is another electronic switch (a MOSFET transistor) M2 the drain-source path of which is interposed between the other terminal of the winding L' and the positive terminal of the voltage supply 1. The gate of the transistor M2 is connected to a corresponding output of the control unit ECU.

A diode D5 has its anode connected to earth and its cathode connected to the winding L'. The control unit ECU is arranged to disable and to enable conduction in the transistor M2 in a first mode of operation and in a second mode of operation, respectively.

In particular, the unit ECU, is arranged to disable the transistor M2 when the switch 2 is closed ("key-on"). In this condition, the auxiliary converter AC of Figure 4 operates in exactly the same way as the auxiliary converter of Figure 2.

When the switch 2 is opened ("key-off"), the unit ECU causes the transistor M1 to become conductive so that the auxiliary converter AC can still supply a regulated direct-current voltage at the output O2 to allow logic circuitry to bring to a conclusion operations and routines provided for upon the occurrence of the "key-off" condition.

In the "key-off" condition, the unit ECU can drive the transistor M2 of the auxiliary converter AC in a manner such that this converter operates substantially as a "step-down" or "bucking" converter, with the use of the winding L' of the transformer as an inductor.

In short, the transistor M2 enables the "power-latching" function which was made possible by means of the diodes D1 and D2 in the converter of Figure 1 also to be implemented in the converter of Figure 2.

In the auxiliary converter AC of Figure 4, the diode D4 may be disposed between the transistor M2 and the cathode of the diode D5, in a common cathode arrangement.

## Claims

1. A dc/dc converter (C) with several outputs (O1, O2) particularly for use in motor vehicles, comprising:
an input (I) for connection to a direct-current supply (1) such as a battery,
a main converter circuit (MC) of the booster type coupled to the input (I) in order to supply, at a first output (O1), a first voltage which is higher than that of the supply (I), and
an auxiliary converter circuit (AC), coupled to the main converter (MC) in order to supply a second regulated direct-current voltage at a second output (O2);
the main converter (MC) comprising a first winding (L) which is wound on a core (CC) of magnetic material and to which a controllable electronic switch (M) is connected, and the auxiliary converter (AC) being of the fly-back type and comprising a second winding (L') wound on the same core (CC) as the first winding (L);
the dc/dc converter being **characterized in that** the auxiliary converter (AC) comprises a controllable electronic switch (M1) in series with the second winding (L'), and
a second controllable electronic switch (M2) connected between the second winding (L') and the voltage supply (1), and **in that** a control unit (ECU) is arranged to disable and to enable the second electronic switch (M2) in a first mode of operation, and in a second mode of operation, respectively.

2. A dc/dc converter according to Claim 1, in which the main converter (MC) comprises an electronic switch (M) and the control unit (ECU) has a first output (A) connected to the control input of the switch (M) and a second output (B) connected to the control input of the switch (M1) of the auxiliary converter (AC), the control unit (ECU) being arranged to disable the switch (M1) of the auxiliary converter (AC) only whilst the switch (M) of the main converter (MC) is conductive.

3. A dc/dc converter according to Claim 2, in which the control unit (ECU) is arranged to make the switch (M1) of the auxiliary converter (AC) conductive when the voltage at the output (O2) of that converter (AC) is below a predetermined value.

4. A dc/dc converter according to Claim 1, in which the input of the main converter (MC) can be connected to the voltage supply (1) by means of a switch (2) and the control unit (ECU) is arranged to implement the first mode of operation and the second mode of operation when the switch (2) is closed and when the switch (2) is open, respectively.

5. A dc/dc converter according to Claim 1 or Claim 4, in which, in the second mode of operation, the control unit (ECU) is arranged to keep the first switch (M1) of the auxiliary converter (AC) permanently enabled and to drive the second switch (M2) of the auxiliary converter (AC) in a manner such that the converter (AC) operates as a step-down or buck converter.

## Patentansprüche

1. Gleichspannungswandler (C) mit mehreren Ausgängen (O1, O2), insbesondere zur Verwendung bei Kraftfahrzeugen, umfassend:
einen Eingang (I) zum Anschluss an einer Gleichstromversorgung (1), wie z.B. einer Batterie,
eine Hauptstromrichterschaltung (MC) von der Art eines Spannungserhöhers, welche am Eingang (I) angekoppelt ist, um an einem ersten Ausgang (O1) eine erste Spannung zuzuführen, welche höher ist als jene der Versorgung (I), und
eine Hilfsstromrichterschaltung (AC), welche am Hauptstromrichter (MC) angekoppelt ist, um an einem zweiten Ausgang (O2) eine zweite geregelte Gleichspannung zuzuführen;
wobei der Hauptstromrichter (MC) eine erste Wicklung (L) umfasst, die auf einem Kern (CC) aus magnetischem Material aufgewickelt ist und an der ein steuerbarer elektronischer Schalter (M) angeschlossen ist, und der dem Rücklauftyp angehörige Hilfsstromrichter (AC) eine zweite Wicklung (L') umfasst, die auf demselben Kern (CC) aufgewickelt ist wie die erste Wicklung (L);
wobei der Gleichspannungswandler **dadurch gekennzeichnet ist, dass** der Hilfsstromrichter (AC) einen mit der zweiten Wicklung (L') in Serie geschalteten, steuerbaren elektronischen Schalter (M1) umfasst, sowie einen zweiten steuerbaren elektronischen Schalter (M2), der zwischen der zweiten Wicklung (L') und der Spannungsversorgung (1) geschaltet ist, und dass eine Steuereinheit (ECU) dazu eingerichtet ist, den zweiten elektronischen Schalter (M2) in einer ersten Betriebsart bzw. in einer zweiten Betriebsart abzuschalten und einzuschalten.

2. Gleichspannungswandler gemäß Anspruch 1, wobei der Hauptstromrichter (MC) einen elektronischen Schalter (M) umfasst und die Steuereinheit (ECU) einen ersten, mit dem Steuereingang des Schalters (M) verbundenen Ausgang (A) und einen zweiten, mit dem Steuereingang des Schalters (M1) des Hilfsstromrichters (AC) verbundenen Ausgang (B) besitzt, wobei die Steuereinheit (ECU) dazu eingerichtet ist, den Schalter (M1) des Hilfsstromrichters (AC) nur dann abzuschalten, wenn der Schalter (M) des Hauptstromrichters (MC) leitend ist.

3. Gleichspannungswandler gemäß Anspruch 2, wobei die Steuereinheit (ECU) dazu eingerichtet ist, den Schalter (M1) des Hilfsstromrichters (AC) leitend zu machen, wenn die Spannung am Ausgang (O2) jenes Stromrichters (AC) unter einem vorbestimmten Wert liegt.

4. Gleichspannungswandler gemäß Anspruch 1, wobei der Eingang des Hauptstromrichters (MC) durch einen Schalter (2) mit der Spannungsversorgung (1) verbunden werden kann und die Steuereinheit (ECU) dazu eingerichtet ist, die erste Betriebsart und die zweite Betriebsart auszuführen, wenn der Schalter (2) geschlossen bzw. der Schalter (2) offen ist.

5. Gleichspannungswandler gemäß Anspruch 1 oder Anspruch 4, wobei die Steuereinheit (ECU) in der zweiten Betriebsart dazu eingerichtet ist, den ersten Schalter (M1) des Hilfsstromrichters (AC) ständig eingeschaltet zu halten und den zweiten Schalter (M2) des Hilfsstromrichters (AC) solcherart zu steuern, dass der Stromrichter (AC) als Abwärts- oder Kompensationsstromrichter fungiert.

## Revendications

1. Convertisseur continu-continu (C) à plusieurs sorties (O1, O2) en particulier pour utilisation dans des véhicules automobiles, comprenant :
une entrée (I) pour une connexion à une alimentation continue (1) telle qu'une batterie,
un circuit convertisseur principal (MC) de type élévateur couplé à l'entrée (I) afin de fournir, à une première sortie (O1), une première tension qui est supérieure à celle de l'alimentation (I), et
un circuit convertisseur auxiliaire (AC), couplé au convertisseur principal (MC) afin de fournir une seconde tension continue régulée à une seconde sortie (O2) ;
le convertisseur principal (MC) comprenant un premier enroulement (L) qui est enroulé sur un noyau (CC) de matériau magnétique et auquel un commutateur électronique commandable (M) est connecté, et le convertisseur auxiliaire (AC) étant de type indirect et comprenant un second enroulement (L') enroulé sur le même noyau (CC) que le premier enroulement (L) ;
le convertisseur continu-continu étant **caractérisé en ce que** le convertisseur auxiliaire (AC) comprend un commutateur électronique commandable (M1) en série avec le second enroulement (L'), et
un second commutateur électronique commandable (M2) connecté entre le second enroulement (L') et l'alimentation en tension (1), et **en ce qu'**une unité de commande (ECU) est agencée pour désactiver et activer le second commutateur électronique (M2) dans un premier mode de fonctionnement, et dans un second mode de fonctionnement, respectivement.

2. Convertisseur continu-continu selon la revendication 1, dans lequel le convertisseur principal (MC) comprend un commutateur électronique (M) et l'unité de commande (ECU) a une première sortie (A) connectée à l'entrée de commande du commutateur (M) et une seconde sortie (B) connectée à l'entrée de commande du commutateur (M1) du convertisseur auxiliaire (AC), l'unité de commande (ECU) étant agencée pour désactiver le commutateur (M1) du convertisseur auxiliaire (AC) uniquement lorsque le commutateur (M) du convertisseur principal (MC) est conducteur.

3. Convertisseur continu-continu selon la revendication 2, dans lequel l'unité de commande (ECU) est agencée pour rendre le commutateur (M1) du convertisseur auxiliaire (AC) conducteur lorsque la tension à la sortie (O2) de ce convertisseur (AC) est inférieure à une valeur prédéterminée.

4. Convertisseur continu-continu selon la revendication 1, dans lequel l'entrée du convertisseur principal (MC) peut être connectée à l'alimentation en tension (1) au moyen d'un commutateur (2), et l'unité de commande (ECU) est agencée pour mettre en oeuvre le premier mode de fonctionnement et le second mode de fonctionnement lorsque le commutateur (2) est fermé et lorsque le commutateur (2) est ouvert, respectivement.

5. Convertisseur continu-continu selon la revendication 1 ou 4, dans lequel, dans le second mode de fonctionnement, l'unité de commande (ECU) est agencée pour maintenir le premier commutateur (M1) du convertisseur auxiliaire (AC) activé en permanence et pour entraîner le second commutateur (M2) du convertisseur auxiliaire (AC) d'une manière telle que le convertisseur (AC) fonctionne comme un convertisseur abaisseur ou compensateur.
